# EUROPEAN PATENT SPECIFICATION

(11) **EP 1 418 700 B1**
(45) Date of publication and mention of the grant of the patent: **28.12.2005**
(21) Application number: 03025024.5
(22) Date of filing: 30.10.2003
(51) Int. Cl.: H04L 9/06

(54) **Method and device for communicating encrypted asynchronous and synchronous packets**
Verfahren und Vorrichtung zum Übertragen von asynchronen und synchronen verschlüsselten Paketen
Méthode et dispositif de communication de paquets asynchrones et synchrones cryptés

(30) Priority: 05.11.2002 JP 2002321355
(43) Date of publication of application: 12.05.2004
(73) Proprietor: KABUSHIKI KAISHA TOSHIBA, Tokyo (JP)
(72) Inventor: Kokubo, Takashi, Int. Prop. Div. , Toshiba Corp., Tokyo 105-8001 (JP); Okuyama, Takehiko, Int. Prop. Div. , Toshiba Corp., Tokyo 105-8001 (JP)
(74) Representative: Henkel, Feiler & Hänzel

(56) References cited:
- EP-A- 1 089 274
- US-A1- 2001 033 656
- PATENT ABSTRACTS OF JAPAN vol. 1995, no. 08, 29 September 1995 (1995-09-29) & JP 07 123115 A (MATSUSHITA ELECTRIC IND CO LTD), 12 May 1995 (1995-05-12)

## Description

The present invention relates to a communication device for conducting packet communication, or in particular to a communication device and a communication method for conducting the packet communication by encrypting asynchronous packets.

With the recent development and extension of the use of a great variety of digital devices, demand has arisen for the functions of communication between digital devices. As a specific example, a DTV (Digital Television) and a DVD (Digital Versatile Disk) player having the communication functions such as IEEE (Institute of Electrical Electronics Engineers) 1394 have come to be widely used.

An example of the conventional techniques (as described in Jpn. Pat. Appln. KOKAI Publication No. 08-184881) related to these devices is a digital device having the function of copying the digital information to be handled. This conventional digital device, for example, comprises a transmitting-side interface including means for detecting the copy generation management information from a predetermined data format and means for converting the predetermined data format into a packet format of a network bus, wherein the detected copy management information is inserted at a predetermined position of the packet format after conversion by the conversion means and sent out to the network bus. The digital device, though not expressly described, is considered applicable to the synchronous packet under IEEE1394.

Nevertheless, a method of encrypting an asynchronous packet is not described. In the case where synchronous packets are encrypted by the DTCP (Digital Transmission Content Protection) encryption scheme or the like, therefore, the information of asynchronous packets (image information, etc.) cannot be encrypted together with the synchronous packets and therefore no security can be maintained.

Specifically, in the conventional communication devices, the encryption process such as the block cipher used for synchronous packets cannot be used directly for asynchronous packets due to different data length. In a digital device which handles synchronous packets coexisting with asynchronous packets, therefore, only the synchronous packets are encrypted with block cipher while asynchronous packets are not encrypted for communication, thereby posing the problem that the asynchronous packets are exposed to illegal copying by a third party and security cannot be maintained.

US 2001 00 33656 discloses a block encryption method and schemes (modes of operation) that provide both data confidentiality and integrity with a single cryptographic primitive and a single processing pass over the input plaintext string by using a non-cryptographic Manipulation Detection Code function for secure data communication over insecure channels and for secure data storage on insecure media. In a further aspect, this document discloses software and hardware implementations, and use in high-performance and low-power applications, and low-power, low-cost hardware devices. The block encryption method and schemes allow encryption and decryption in parallel or pipelined manners in addition to sequential operation, as well as real-time applications.

JP 07 123115 discloses a synchronous packet generator and an asynchronous packet generator and shows an encryption unit which encrypts the asynchronous packet (P_{N2}) and a synchronous packet as well as a transmitting unit.

EP 1 089 274 relates to a data processing unit.

The object of the present invention is to provide a communication device and a communication method for conducting communication by encrypting asynchronous packets as well as synchronous packets.

The above object is achieved by a communication device according to claim 1 and by a communication method according to claim 10. The dependent claims are directed to further advantageous aspects of the invention.

The invention can be more fully understood from the following detailed description when taken in conjunction with the accompanying drawings, in which:
FIG. 1 is a block diagram showing an example of a configuration of a TV set making up a communication system according to the invention;
FIG. 2 is a diagram for explaining the padding process executed on asynchronous packets in a communication device according to the invention;
FIG. 3 is a diagram for explaining that control information is added to asynchronous packets padded in a communication device according to the invention;
FIG. 4 is a diagram for explaining that an exclusive asynchronous packet for the control information is added to the asynchronous packet padded in a communication according to the invention;
FIG. 5 is a flowchart for explaining the operation of transmitting by padding an asynchronous packet in a communication device according to the invention;
FIG. 6 is a flowchart for explaining the operation of receiving an asynchronous packet padded in a communication device according to the invention; and
FIG. 7 is a system diagram showing an example of a network system configured of a communication device according to the invention.

A communication device according to an embodiment of the invention will be explained in detail below with reference to the accompanying drawings.

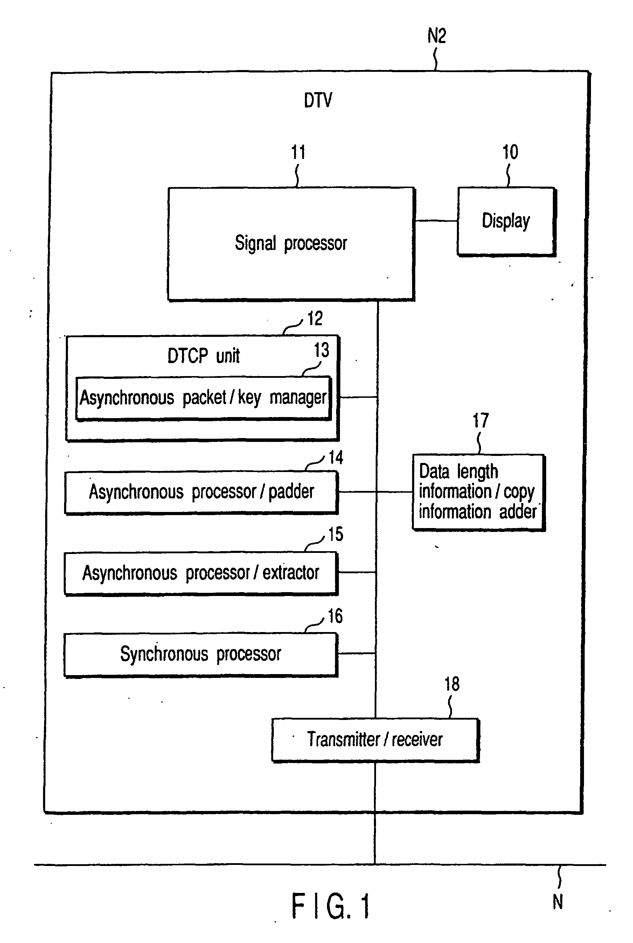

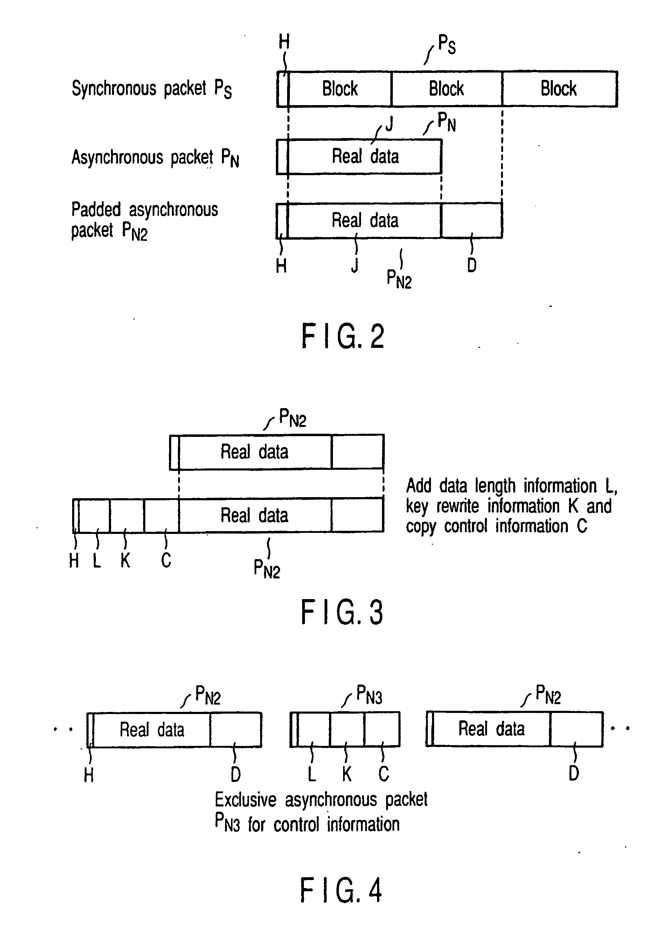

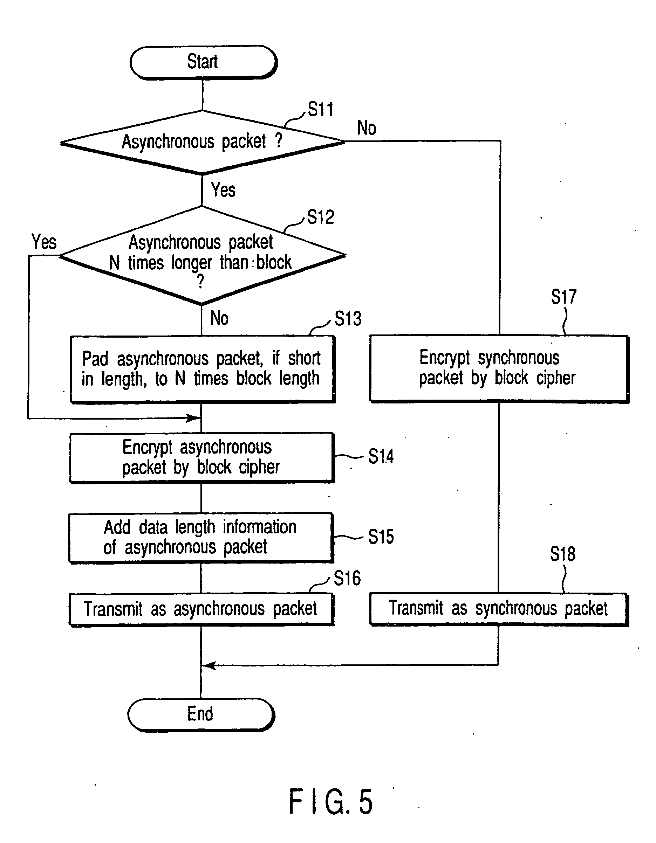

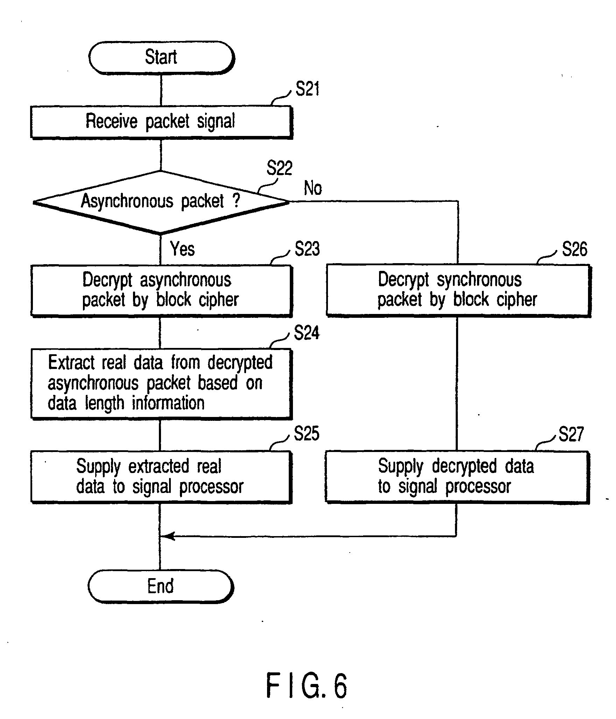

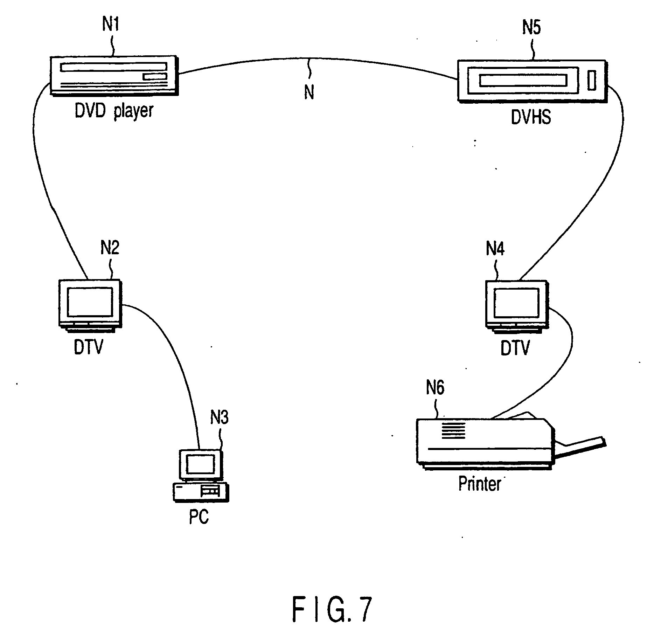

FIG. 1 is a block diagram showing an example of a configuration of a TV set making up a communication device according to the invention, FIG. 2 is a diagram for explaining the padding process executed on an asynchronous packet in a communication device according to the invention, FIG. 3 is a diagram for explaining that control information is added to the padded asynchronous packet padded, FIG. 4 is a diagram for explaining that an exclusive asynchronous packet for the control information is added to the padded asynchronous packet, FIG. 5 is a flowchart for explaining the operation of transmitting by padding an asynchronous packet, FIG. 6 is a flowchart for explaining the operation of receiving the asynchronous packet padded, and FIG. 7 is a system diagram showing an example of a network system configured of a communication device according to the invention.

Here, above description, "the padding process" can be expressed similarly that it is equal to "the padding process which adds data to an asynchronous packet (P_{N}) to form an integer multiple of a block length. That is to say, in this specification, the term "pad" can be changed to the term "add".

### [Configuration of communication device and network system]

A communication device according to the invention is a digital device such as a digital TV, which has the communication functions of IEEE1394 or the like. The information transferred through these devices are handled in packets which are divided into synchronous packets and asynchronous packets.

In FIG. 1, a communication device N2 comprises a signal processor 11 having the original functions of digital TV including a tuning circuit, a decoding circuit, a video processing circuit and an audio amplifier, and a display unit 10 for displaying images. Further, the communication device N2 comprises communication functions such as a DTCP unit 12 for executing the block encryption process and an asynchronous packet/key management unit 13 included in the DTCP unit 12. The communication device N2 further comprises an asynchronous processor/padding processor 14 connected to the signal processor 11 and the DTCP unit 12 through a data bus for handling the asynchronous packets to be transmitted, an asynchronous processor/extractor 15 for handling the received asynchronous packets, a synchronous processor 16 for handling synchronous packets, a data length information/copy information adder 17 for adding the data length information and copy information to the packets, and a transmitter/receiver 18.

Furthermore, the communication device according to the invention makes up a network N connected to a plurality of digital devices. This network is shown in the system diagram of FIG. 7. Specifically, in FIG. 7, the communication device according to the invention is used with a network system configured of a DVD player N1, a DTVN 2, a PC (Personal Computer) N3, a DTVN 4, a DVHSN 5 and a printer N6 connected to the network N in FIG. 7.

In this embodiment, the packet communication based on IEEE1394 as a communication protocol is shown. The invention is, however, not limited to this communication protocol, but may use protocols for other network communications.

### [Communication operation and padding operation according to the invention]

Next, the communication operation of a communication device according to the invention and the padding operation unique to the invention will be explained in detail with reference to a timing chart and a flowchart for the packets.

First, the difference between synchronous packets and asynchronous packets will be explained. Synchronous packets are used mainly for dynamic image data and voice data, and has temporal limitation for packet transmission. Also, the time can be set between the transmitting and receiving ends. The synchronous packets are used for real time transmission, and the length of the real data portion of the packet is an integer multiple of a fixed value. Asynchronous packets, on the other hand, are used mainly for control data and still image data, and have no temporal limitation. Being used for non-real time transmission, the asynchronous packets can be modulated.

The display unit 10 and the signal processor 11 of the DTV (Digital Television) N2 shown in FIG. 1 have the original configuration of digital TV. A broadcast signal from an external source is received and demodulated to output a video signal. A corresponding image is displayed on the display unit 10.

Further, this video signal is transmitted as synchronous packets to the DVHSN 5 shown in FIG. 7 according to the communication protocol of IEEE1394, for example, using the associated communication functions. A still image signal constituting a part of the video signal, on the other hand, is transmitted as asynchronous packets to the printer N6 shown in FIG. 7. With reference to a flowchart, the transmitting operation and the receiving operation will be explained in detail below.

### [Transmitting operation]

First, in the flowchart of FIG. 5, it is determined whether the packet communication is conducted using synchronous or asynchronous packets (S11). In the case where synchronous packets are used for the packet communication, as shown in FIG. 2, each synchronous packet P_{S} of a length equal to an integer multiple of a predetermined block length supplied from the signal processor 11 is supplied to the DTCP unit 12 and encrypted in blocks (S17). After being processed in a synchronous processor 16, the synchronous packet P_{S} is supplied to other communication devices such as the DVHSN 5 on the network N through the transmitting unit 18 (S18).

In the case where the packet communication is carried out with asynchronous packets (S11), on the other hand, as shown in FIG. 2, it is determined whether the real data J of the asynchronous packets has a length equal to an integer multiple of the block length or not (S12). The asynchronous packets, if as long as an integer multiple of the block length, are supplied directly to the DTCP unit 12 without being padded, and encrypted in blocks (S14). The asynchronous packets, if not equal in length to an integer multiple of the block length, are subjected to the padding process by the padding unit 14. Specifically, as shown in FIG. 2, the asynchronous packets P_{N} are subjected to the padding process in which the additional data D is added to the real data J. The asynchronous packets are thus adjusted in a length to an integer multiple (or double) of the block length in preparation for the subsequent block encryption in the DTCP unit 12 (S13). The asynchronous packet P_{N2} thus padded is supplied to the DTCP unit 12 and encrypted in blocks (S14).

After that, the asynchronous packet P_{N2} that has been encrypted in a similar way to a synchronous packet, as shown in FIG. 3, has the data length information of the real data J added after the header H, for example, by the data length information adder 17 (S15). Then, the packet P_{N2} is transmitted to the transmitter 18, and through the network N to the printer N6, for example (S16).

By doing so, the communication device according to the invention can carry out the communication process while at the same time maintaining security, by encrypting, with block cipher or the like, the information in the asynchronous packets in a manner similar to the information in the synchronous packets.

Further, as shown in FIG. 3, the encryption key for encryption in the DTCP unit 12 is not directly used for the asynchronous packets, but the encryption key is rewritten by the key management unit 13 based on the key rewrite information K, for example, in accordance with the time. This key rewrite information K is suitably added after the header H, as shown in FIG. 3. In this way, the asynchronous packets, like the synchronous packets, can be encrypted using a time-varying key. Thus, the asynchronous packets can be encrypted/decrypted by the same technique as the synchronous packets.

The key rewrite information K may take various forms. For example, it may be time information indicating when the time-varying key has changed, or a flag indicating that the time-varying key has changed, or encryption information for rewriting the key. The key rewrite information K is preferably shared by the synchronous and asynchronous packets.

Further, the copy control information C indicating that the number of times the packet information is copied is limited to one or zero is also preferably added after the header H of the asynchronous packet P_{N2}. This copy control information specifies the number of times the copying is permitted, by the 2-bit information, for example. As a result, the copyright of the contents of the asynchronous packets, like that of the synchronous packets, can be protected to a predetermined degree by the same method as in the synchronous packets by limiting the number of times the contents are copied.

Furthermore, as shown in FIG. 4, the control information including the data length information L, the key rewrite information K and the copy control information C are added not necessarily after the header H as shown in FIG. 3. Instead, an exclusive packet P_{N3} for the control information is prepared by the functions of the data length information/copy control information adder 17, for example, and inserted suitably between the asynchronous packets P_{N2}. In this way, the encryption/decryption process and the copying process can be controlled using a time-varying key for the asynchronous packets, like the synchronous packets. [Receiving operation]

The synchronous packets and the asynchronous packets transmitted by the operation described above are received by other communication devices through the network N, and the receiving operation is performed as described below.

Specifically, in the flowchart of FIG. 6, upon receipt of a communication packet by the receiver 18 (S21), it is determined whether the communication packet is a synchronous packet or an asynchronous packet (S22). In the case where the communication packet is a synchronous packet P_{S}, the sync processor 16 executes such process as extracting the control information from the header H or the like, and then supplies the packet to the DTCP unit 12, where it is decrypted based on the encryption key by block cipher. In the case where the time-varying key is used for the encryption process, the encryption key is rewritten to the one used for encryption by use of the key rewrite information K extracted from the header H or the like, after which the synchronous packet is decrypted using the rewritten encryption key (S26). The synchronous packet thus decrypted is supplied to the signal processor 11 (S27).

In the case where it is determined that the communication packet is an asynchronous packet (S22), on the other hand, the asynchronous packet P_{N2} is supplied to the DTCP unit 12 and decrypted by block cipher (S23). In the case where the time-varying key is used for encryption, the encryption key is rewritten to the one used for encryption by the key rewrite information K added after the header H.by the key management unit 13, after which the asynchronous packet P_{N2} is decrypted using the rewritten encryption key.

After that, the asynchronous packet P_{N2} is supplied to the asynchronous processor/extractor 15, and based on the data length information L added after the header H, as shown in FIG. 2, the real data J excluding the added data D is extracted (S24). After that, the extracted real data J is supplied to the signal processor 11 (S25).

By doing so, in the communication device according to the invention, the information for the asynchronous packets, like those for the synchronous packets, can be decrypted by block cipher or the like. Thus, the communication process can be executed while maintaining security.

Further, assume that the copy control information C indicating that the number of times the packet information is copied is limited to, say, one or zero, or that the packet information can be copied any number of time without limitation is added after the header H of the asynchronous packet P_{N2}. Then, the signal processor 11 performs the copy control operation on the real data J making up the contents of the asynchronous packet P_{N2}, based no the copy control information C. As a result, for the asynchronous packets, like the synchronous packets, the copyright of the contents can be protected to a predetermined degree in the same manner as the synchronous packets by limiting the number of times the contents are copied.

Furthermore, as shown in FIG. 4, the control information including the data length information L, the key rewrite information K and the copy control information C can be transmitted as an exclusive packets P_{N3} for the control information inserted between the asynchronous packets P_{N2}. In the asynchronous processor/extractor 15, each control information is recovered from the exclusive packet P_{N3} and used for the subsequent control operations. As a result, the asynchronous packets, like the synchronous packets, can be encrypted/decrypted and the copy operation thereof controlled by a similar technique using the time-varying key.

By the various embodiments described above, those skilled in the art can implement this invention. Further, those skilled in the art can conceive various modifications of these embodiments easily, and apply the invention to various embodiments without specific inventive ability. This invention, therefore, covers a wide range not in contradiction with the principle and the novel features disclosed above and is not limited to the embodiments described above.

It will thus be understood from the foregoing detailed description that according to this invention, even asynchronous packets of a length not an integer multiple of the encryption block length can be encrypted and decrypted similarly to synchronous packets by adjusting the data length through the padding process. As a result, there is provided a communication device which can execute the communication process while maintaining security for asynchronous packets similarly to synchronous packets.

## Claims

1. A communication device comprising:
a padding unit (14) adapted to add data to an asynchronous packet (P_{N}) to form a packet whose length is an integer multiple of a block length;
an encryption unit (12) adapted to encrypt the asynchronous packet (P_{N2}) added by the padding unit (14) and a synchronous packet;
a transmitting unit (18) adapted to transmit the added asynchronous packet (P_{N2}) and the synchronous packet encrypted by the encryption unit (12), **characterised by**
an adder which (17) adapted to insert an exclusive packet (P_{N3}) between the encrypted added asynchronous packets (P_{N2}), said exclusive packet being one of control information including data length information (L) on a length of real data of the asynchronous packet, key rewrite information (K) for rewriting key information used for encryption by the encryption unit (12) and copy control information (C) for limiting the number of times the asynchronous packet is copied.

2. A communication device according to claim 1, wherein said adder (17) is an data length information (L) adder (17) which adds data length information (L) on the length of the real data of the asynchronous packet to the encrypted added asynchronous packet (P_{N2}).

3. A communication device according to claim 1, further comprising:
a key management unit (13) which rewrites the key information used for encryption by the encryption unit (12), based on key rewrite information (K), and adds the key rewrite information (K) to the encrypted added asynchronous packet (P_{N2}).

4. A communication device according to claim 1, wherein said adder (17) is a copy control information (C) adder which adds copy control information (C) which limits the number of times the asynchronous packet is copied, to the encrypted added asynchronous packet (P_{N2}).

5. A communication device according to claim 1, further comprising:
a receiving unit (18) which receives the encrypted added asynchronous packet (P_{N2}) transmitted from the transmitting unit (18);
a decryption unit (12) which decrypts the encrypted added asynchronous packet (P_{N2}) received by the receiving unit (18) and outputs the added asynchronous packet (P_{N2}); and
an extraction unit (15) which extracts real data, except for the data added by the padding unit (14), from the added asynchronous packet (P_{N2}) output from the decryption unit (12).

6. A communication device according to claim 6, wherein the extraction unit (15) detects data length information (L) on a length of the real data of the asynchronous packet and based on the detected data length information (L), extracts the real data except for the added data, from the added asynchronous packet (P_{N2}) output from the decryption unit (12).

7. A communication device according to claim 5, wherein the decryption unit (12) detects key rewrite information (K) which rewrites key information used for encryption by the encryption unit (12) and, based on the latest key information rewritten by the key rewrite information (K), decrypts the encrypted added asynchronous packet received by the receiving unit (18).

8. A communication device according to claim 5, further comprising:
a copy function (11) which detects copy control information (C) for limiting the number of times the asynchronous packet received by the receiving unit (18) is copied and copies at least the asynchronous packet within the limit.

9. A communication device according to claim 5, wherein the receiving unit (18) receives selected one of control information including the data length information (L) on a length of the real data of the asynchronous packet, key rewrite information (K) which rewrites key information used for encryption by the encryption unit (12) and copy control information (C) for limiting the number of times the asynchronous packet is copied.

10. A communication method comprising:
adding data to an asynchronous packet to form a packet whose length is an integer multiple of a block length;
encrypting the added asynchronous packet (P_{N2}) and a synchronous packet;
transmitting the encrypted added asynchronous packet (P_{N2}) and the encrypted synchronous packet, **characterized by**
inserting an exclusive packet (P_{N3}) between encrypted added asynchronous packets (P_{N2}) said exclusive packet being one of control information including data length information (L) on a length of real data of the asynchronous packet, key rewrite information (K) which rewrites key information used for encryption by the encryption unit (12) and copy control information (C) for limiting the number of times the asynchronous packet is copied and

11. A communication method according to claim 10, further comprising: adding data length information (L) on the length of the real data of the asynchronous packet to the encrypted added asynchronous packet (P_{N2}).

12. A communication method according to claim 10, further comprising: rewriting the key information used for encryption based on key rewrite information (K), and adding the key rewrite information (K) to the encrypted added asynchronous packet (P_{N2}).

13. A communication method according to claim 10, further comprising: adding copy control information (C) for limiting the number of times the asynchronous packet is copied, to the encrypted added asynchronous packet (P_{N2}).

14. A communication method according to claim 10, further comprising:
receiving the encrypted added asynchronous packet (P_{N2}) transmitted;
decrypting the encrypted added asynchronous packet (P_{N2}) and outputs the added asynchronous packet (P_{N2}); and
extracting real data except for the added data from the added asynchronous packet (P_{N2}).

15. A communication method according to claim 14, wherein data length information (L) on a length of the real data of the asynchronous packet is detected and, based on the detected data length information (L), the real data except for the added data is extracted from the decrypted added asynchronous packet (P_{N2}).

16. A communication method according to claim 14, further comprising:
detecting key rewrite information (K) which rewrites key information used for encryption is detected, and based on the latest key information rewritten by the detected key rewrite information (K), the encrypted added asynchronous packet (P_{N2}) received is decrypted.

17. A communication method according to claim 14, further comprising:
detecting copy control information (C) for limiting the number of times the asynchronous packet is copied, and copying at least the asynchronous packet within the limit.

18. A communication method according to claim 14, wherein one of the control information including the data length information (L) on a length of the real data of the asynchronous packet, key rewrite information (K) which rewrites key information used for encryption and copy control information (C) for limiting the number of times the asynchronous packet is copied, is received as an exclusive control information packet.

## Patentansprüche

1. Kommunikationsvorrichtung mit:
einer Fülleinheit (14), die angepasst ist, Daten zu einem asynchronen Paket (P_{N}) hinzuzufügen, um ein Paket zu bilden, dessen Länge ein ganzzahliges Vielfaches einer Blocklänge ist;
einer Verschlüsselungseinheit (12), die angepasst ist, um das durch die Fülleinheit (14) hinzugefügte asynchrone Paket (P_{N2}) und ein synchrones Paket zu verschlüsseln;
einer Übertragungseinheit (18), die angepasst ist, das hinzugefügte asynchrone Paket (P_{N2}) und das durch die Verschlüsselungseinheit (12) verschlüsselte synchrone Paket zu übertragen, **gekennzeichnet durch**
einen Addierer (17), der angepasst ist, ein exklusives Paket (P_{N3}) zwischen den verschlüsselten hinzugefügten asynchronen Paketen (P_{N2}) einzufügen, wobei das exklusive Paket eines der folgenden ist: Steuerinformation einschließlich Datenlängeninformation (L) über eine Länge von reellen Daten des asynchronen Pakets, Schlüsselauffrischinformation (K) zum Auffrischen von Schlüsselinformation, die zur Verschlüsselung **durch** die Verschlüsselungseinheit (12) verwendet wird, und Kopiersteuerinformation (C) zum Begrenzen der Anzahl von Malen, die das asynchrone Paket kopiert wird.

2. Kommunikationsvorrichtung gemäß Anspruch 1, bei der der Addierer (17) ein Datenlängeninformationsaddierer (L-Addierer) (17) ist, der Datenlängeninformation (L) über die Länge der reellen Daten des asynchronen Pakets zu dem verschlüsselten hinzugefügten asynchronen Paket (P_{N2}) hinzufügt.

3. Kommunikationsvorrichtung gemäß Anspruch 1, ferner mit:
einer Schlüsselmanagementeinheit (13), die die Schlüsselinformation, die zur Verschlüsselung durch die Verschlüsselungseinheit (12) verwendet wird, basierend auf Schlüsselauffrischinformation (K) auffrischt und die Schlüsselauffrischinformation (K) zu dem verschlüsselten hinzugefügten synchronen Paket (P_{N2}) hinzufügt.

4. Kommunikationsvorrichtung gemäß Anspruch 1, bei der Addierer (17) ein Kopiersteuerinformationsaddierer (C-Addierer) ist, der Kopiersteuerinformation (C), die die Anzahl von Malen begrenzt, die das asynchrone Paket kopiert wird, zu dem verschlüsselten hinzugefügten asynchronen Paket (P_{N2}) hinzufügt.

5. Kommunikationsvorrichtung gemäß Anspruch 1, ferner mit:
einer Empfangseinheit (18), die das verschlüsselte hinzugefügte asynchrone Paket (P_{N2}) empfängt, das von der Übertragungseinheit (18) übertragen wurde;
einer Entschlüsselungseinheit (12), die das verschlüsselte hinzugefügte asynchrone Paket (P_{N2}) entschlüsselt, das von der Empfangseinheit (18) empfangen wurde, und das hinzugefügte asynchrone Paket (P_{N2}) ausgibt; und
eine Extrahierungseinheit (15), die reelle Daten mit Ausnahme der Daten, die durch die Fülleinheit (14) hinzugefügt wurden, aus dem hinzugefügten synchronen Paket (P_{N2}) extrahiert, das von der Verschlüsselungseinheit (12) ausgegeben wurde.

6. Kommunikationsvorrichtung gemäß Anspruch 6, bei der die Extrahierungseinheit (15) Datenlängeninformation (L) über eine Länge der reellen Daten des asynchronen Pakets erfasst und basierend auf der erfassten Datenlängeninformation (L) die reellen Daten mit Ausnahme der hinzugefügten Daten aus dem hinzugefügten asynchronen Paket (P_{N2}) extrahiert, das von der Verschlüsselungseinheit (12) ausgegeben wurde.

7. Kommunikationsvorrichtung gemäß Anspruch 5, bei der die Entschlüsselungseinheit (12) Schlüsselauffrischinformation (K) erfasst, die Schlüsselinformation auffrischt, die zur Verschlüsselung durch die Verschlüsselungseinheit (12) verwendet wurde, und basierend auf der letzten Schlüsselinformation, die durch die Schlüsselauffrischinformation (K) aufgefrischt wurde, das verschlüsselte hinzugefügte asynchrone Paket entschlüsselt, das von der Empfangseinheit (18) empfangen wurde.

8. Kommunikationsvorrichtung gemäß Anspruch 5, ferner mit:
einer Kopierfunktion (11), die Kopiersteuerinformation (C) zum Begrenzen der Anzahl von Malen erfasst, die das durch die Empfangseinheit (18) empfangene asynchrone Paket kopiert wird, und mindestens das asynchrone Paket innerhalb der Grenze kopiert.

9. Kommunikationsvorrichtung gemäß Anspruch 5, bei der die Empfangseinheit (18) eines der folgenden empfängt:
Steuerinformation einschließlich Datenlängeninformation (L) über eine Länge der reellen Daten des asynchronen Pakets, Schlüsselauffrischinformation (K), die Schlüsselinformation auffrischt, die zur Verschlüsselung durch die Verschlüsselungseinheit (12) verwendet wurde, und
Kopiersteuerinformation (C) zum Begrenzen der Anzahl von Malen, die das asynchrone Paket kopiert wird.

10. Kommunikationsverfahren, mit:
Hinzufügen von Daten zu einem asynchronen Paket, um ein Paket zu bilden, dessen Länge ein ganzzahliges Vielfaches einer Blocklänge ist;
Verschlüsseln des hinzugefügten asynchronen Pakets (P_{N2}) und eines synchronen Pakets;
Übertragen des verschlüsselten hinzugefügten asynchronen Pakets (P_{N2}) und des verschlüsselten synchronen Pakets, **gekennzeichnet durch**
Einfügen eines exklusiven Pakets (P_{N3}) zwischen verschlüsselten hinzugefügten asynchronen Paketen (P_{N2}), wobei das exklusive Paket eines der folgenden ist:
Steuerinformation einschließlich Datenlängeninformation (L) über eine Länge von reellen Daten des asynchronen Pakets, Schlüsselauffrischinformation (K), die Schlüsselinformation auffrischt, die zur Verschlüsselung **durch** die Verschlüsselungseinheit (12) verwendet wird, und Kopiersteuerinformation (C) zum Begrenzen der Anzahl von Malen, die das asynchrone Paket kopiert wird.

11. Kommunikationsverfahren gemäß Anspruch 10, ferner mit:
Hinzufügen von Datenlängeninformation (L) über die Länge der reellen Daten des asynchronen Pakets zu dem verschlüsselten hinzugefügten asynchronen Paket (P_{N2}).

12. Kommunikationsverfahren gemäß Anspruch 10, ferner mit:
Auffrischen der Schlüsselinformation, die zur Verschlüsselung verwendet wird, basierend auf Schlüsselauffrischinformation (K), und Hinzufügen der Schlüsselauffrischinformation (K) zu dem verschlüsselten hinzugefügten asynchronen Paket (P_{N2}).

13. Kommunikationsverfahren gemäß Anspruch 10, ferner mit:
Hinzufügen von Kopiersteuerinformation (C)zum Begrenzen der Anzahl von Malen, die das asynchrone Paket kopiert wird, zu den verschlüsselten hinzugefügten asynchronen Paket (P_{N2}).

14. Kommunikationsverfahren gemäß Anspruch 10, ferner mit:
Empfangen des verschlüsselten hinzugefügten übertragenen asynchronen Pakets (P_{N2});
Entschlüsseln des verschlüsselten hinzugefügten asynchronen Pakets (P_{N2}) und Ausgeben des hinzugefügten asynchronen Pakets (P_{N2}); und
Extrahieren reeller Daten mit Ausnahme der hinzugefügten Daten aus dem hinzugefügten asynchronen Paket (P_{N2}).

15. Kommunikationsverfahren gemäß Anspruch 14, bei dem Datenlängeninformation (L) über eine Länge der reellen Daten des asynchronen Pakets erfasst wird, und basierend auf der erfassten Datenlängeninformation (L) die reellen Daten mit Ausnahme der hinzugefügten Daten aus dem entschlüsselten hinzugefügten asynchronen Paket (P_{N2}) extrahiert werden.

16. Kommunikationsverfahren gemäß Anspruch 14, ferner mit:
Erfassen von Schlüsselauffrischinformation (K), die Schlüsselinformation auffrischt, die zur Verschlüsselung verwendet wird, und basierend auf der letzten Schlüsselinformation, die durch die erfasste Schlüsselauffrischinformation (K) aufgefrischt wurde, das verschlüsselte hinzugefügte empfangene asynchrone Paket (P_{N2}) entschlüsselt wird.

17. Kommunikationsverfahren gemäß Anspruch 14, ferner mit:
Erfassen von Kopiersteuerinformation (C) zum Begrenzen der Anzahl von Malen, die das asynchrone Paket kopiert wird, und Kopieren mindestens des asynchronen Pakets innerhalb der Grenze.

18. Kommunikationsverfahren gemäß Anspruch 14, bei der eine der Steuerinformation, die die Datenlängeninformation (L) über eine Länge der reellen Daten des asynchronen Pakets, Schlüsselauffrischinformation (K), die zur Verschlüsselung verwendete Schlüsselinformation auffrischt, und Kopiersteuerinformation (C) zum Begrenzen der Anzahl von Malen, die das asynchrone Paket kopiert wird, umfasst, als ein exklusives Steuerinformationspaket empfangen wird.

## Revendications

1. Dispositif de communication comprenant :
une unité de complémentation (14) conçue pour ajouter des données à un paquet asynchrone (P_{N}) pour former un paquet ayant une longueur multiple entier d'une longueur de bloc ;
une unité de chiffrement (12) conçue pour chiffrer le paquet asynchrone (P_{N2}) ajouté par l'unité de complémentation (14) et un paquet synchrone ;
une unité de transmission (18) conçue pour transmettre le paquet asynchrone ajouté (P_{N2}) et le paquet synchrone chiffrés par l'unité de chiffrement (12) ;
un additionneur (17) conçu pour placer un paquet exclusif (P_{N3}) entre les paquets asynchrones ajoutés chiffrés (P_{N2}), ledit paquet exclusif étant un paquet d'information de commande comprenant une information de longueur de données (L) concernant une longueur de vraies données du paquet asynchrone, une information de réécriture de clé (K) pour réécrire l'information de clé utilisée pour le chiffrement par l'unité de chiffrement (12) et une information de commande de copie (C) pour limiter le nombre de fois que le paquet asynchrone est copié.

2. Dispositif de communication selon la revendication 1, dans lequel ledit additionneur (17) est un additionneur d'information de longueur de données (L) (17) qui ajoute une information de longueur de données (L) concernant la longueur des vraies données du paquet asynchrone au paquet asynchrone ajouté chiffré (P_{N2}).

3. Dispositif de communication selon la revendication 1, comprenant de plus :
une unité de gestion de clé (13) qui réécrit l'information de clé utilisée pour le chiffrement par l'unité de chiffrement (12), en fonction de l'information de réécriture de clé (K), et ajoute l'information de réécriture de clé (K) au paquet asynchrone ajouté chiffré (P_{N2}).

4. Dispositif de communication selon la revendication 1, dans lequel ledit additionneur (17) est un additionneur d'information de commande de copie (C) qui ajoute une information de commande de copie (C) qui limitent le nombre de fois que le paquet asynchrone est copié, au paquet asynchrone ajouté chiffré (P_{N2}).

5. Dispositif de communication selon la revendication 1, comprenant de plus :
une unité de réception (18) qui reçoit le paquet asynchrone ajouté chiffré (P_{N2}) transmis depuis l'unité de transmission (18) ;
une unité de déchiffrement (12) qui déchiffre le paquet asynchrone ajouté chiffré (P_{N2}) reçu par l'unité de réception (18) et émet le paquet asynchrone ajouté (P_{N2}) ; et
une unité d'extraction (15) qui extrait des vraies données, à l'exception des données ajoutées par l'unité de complémentation (14), du paquet asynchrone ajouté (P_{N2}) émis par l'unité de déchiffrement (12).

6. Dispositif de communication selon la revendication 6, dans lequel l'unité d'extraction (15) détecte l'information de longueur de données (L) concernant la longueur des vraies données du paquet asynchrone et en fonction de l'information de longueur de données (L) détectée, extrait les vraies données à l'exception des données ajoutées, du paquet asynchrone ajouté (P_{N2}) émis par l'unité de déchiffrement (12).

7. Dispositif de communication selon la revendication 5, dans lequel l'unité de déchiffrement (12) détecte une information de réécriture de clé (K) qui réécrit une information de clé utilisée pour le chiffrement par l'unité de chiffrement (12) et, en fonction de la dernière information de clé réécrite par l'information de réécriture de clé (K), déchiffre le paquet asynchrone ajouté chiffré reçu par l'unité de réception (18).

8. Dispositif de communication selon la revendication 5, comprenant de plus :
une fonction de copie (11) qui détecte une information de commande de copie (C) servant à limiter le nombre de fois que le paquet asynchrone reçu par l'unité de réception (18) est copié et copie au moins le paquet asynchrone dans la limite.

9. Dispositif de communication selon la revendication 5, dans lequel l'unité de réception (18) reçoit une information de commande choisie comprenant l'information de longueur de données (L) concernant une longueur des vraies données du paquet asynchrone, l'information de réécriture de clé (K) qui réécrit l'information de clé utilisée pour le chiffrement par l'unité de chiffrement (12) et l'information de commande de copie (C) servant à limiter le nombre de fois que le paquet asynchrone est copié.

10. Procédé de communication comprenant les opérations consistant à :
ajouter des données à un paquet asynchrone pour former un paquet dont la longueur est un multiple entier d'une longueur de bloc ;
chiffrer le paquet asynchrone ajouté (P_{N2}) et un paquet synchrone ;
transmettre le paquet asynchrone ajouté chiffré (P_{N2}) et le paquet synchrone chiffré ;
placer un paquet exclusif (P_{N3}) entre des paquets asynchrones ajoutés chiffrés (P_{N2}), ledit paquet exclusif étant l'une des informations de commande comprenant l'information de longueur de données (L) concernant une longueur de vraies données du paquet asynchrone, l'information de réécriture de clé (K) qui réécrit l'information de clé utilisée pour le chiffrement par l'unité de chiffrement (12) et l'information de commande de copie (C) servant à limiter le nombre de fois que le paquet asynchrone est copié.

11. Procédé de communication selon revendication 10, comprenant de plus l'opération consistant à : ajouter une information de longueur de données (L) concernant la longueur des vraies données du paquet asynchrone au paquet asynchrone ajouté chiffré (P_{N2}).

12. Procédé de communication selon la revendication 10, comprenant de plus l'opération consistant à : réécrire l'information de clé utilisée pour le chiffrement en fonction de l'information de réécriture de clé (K) et ajouter l'information de réécriture de clé (K) au paquet asynchrone ajouté chiffré (P_{N2}).

13. Procédé de communication selon la revendication 10, comprenant de plus l'opération consistant à : ajouter une information de commande de copie (C) pour limiter le nombre de fois que le paquet asynchrone est copié, au paquet asynchrone ajouté chiffré (P_{N2}).

14. Procédé de communication selon la revendication 10, comprenant de plus les opérations consistant à :
recevoir le paquet asynchrone ajouté chiffré (P_{N2}) transmis ;
déchiffrer le paquet asynchrone ajouté chiffré (P_{N2}) et émettre le paquet asynchrone ajouté (PN₂) ; et
extraire des vraies données à l'exception des données ajoutées du paquet asynchrone ajouté (P_{N2}).

15. Procédé de communication selon la revendication 14, dans lequel l'information de longueur de données (L) concernant une longueur des vraies données du paquet asynchrone est détectée et, en fonction de l'information de longueur de données (L) détectée, les vraies données à l'exception des données ajoutées sont extraites du paquet asynchrone ajouté déchiffré (P_{N2}).

16. Procédé de communication selon la revendication 14, comprenant de plus l'opération consistant à :
détecter une information de réécriture de clé (K) qui réécrit une information de clé utilisée pour le chiffrement et, en fonction de la dernière information de clé réécrite par l'information de réécriture de clé détectée (K), déchiffrer le paquet asynchrone ajouté chiffré (P_{N2}) reçu.

17. Procédé de communication selon la revendication 14, comprenant de plus l'opération consistant à :
détecter une information de commande de copie (C) pour limiter le nombre de fois que le paquet asynchrone est copié et copier au moins le paquet asynchrone dans la limite.

18. Procédé de communication selon la revendication 14, dans lequel l'une de l'information de commande comprenant l'information de longueur de données (L) concernant une longueur des vraies données du paquet asynchrone, l'information de réécriture de clé (K) qui réécrit l'information de clé utilisée pour le chiffrement et l'information de copie (C) servant à limiter le nombre de fois que le paquet asynchrone est copié, est reçue comme paquet d'information de commande exclusif.
